# EUROPEAN PATENT APPLICATION

(11) **EP 3 316 584 A1**
(43) Date of publication of application: **02.05.2018**
(21) Application number: 16306395.1
(22) Date of filing: 25.10.2016
(51) Int. Cl.: H04N 21/24, H04L 12/24, H04N 17/00, H04N 21/658

(54) **METHOD FOR ANTICIPATING AND DIAGNOSING RECEPTION PROBLEMS IN A STAND-ALONE SET TOP BOX BASED ON A BUILT-IN SELF-LEARNING FAILURE PREDICTION MODEL AND CORRESPONDING APPARATUS**

(71) Applicant: Thomson Licensing, 92130 Issy-les-Moulineaux (FR)
(72) Inventor: LOUZIR, Ali, 35576 Cesson-Sévigné (FR); HOWSON, Christopher, 35576 Cesson-Sévigné (FR); GILBERTON, Philippe, 35576 Cesson-Sévigné (FR); SACHOT, Jean-Claude, 35576 Cesson-Sévigné (FR)
(74) Representative: Huchet, Anne

(57) **Abstract**

A method for evaluating performance of a receiving device is described including collecting reception parameters for monitoring based on content received from a content delivery system, performing statistical analysis on the collected parameters, comparing results of the statistical analysis to operational parameters, updating a parameter map responsive to results of the comparison, generating a graph of performance of at least one of the collected parameters over time, based on the updated parameter map, determining at least one failure point based on the graph and forwarding an indication of a probable failure responsive to the failure point.

## Description

### FIELD

The proposed method relates to anticipating and diagnosing content delivery system reception problems in a receiving device, such as a set top box (STB).

### BACKGROUND

In multicast and broadcast applications, data are transmitted from a content server to multiple receivers over wired and/or wireless networks. A multicast system as described herein is a system in which a server transmits the same data to multiple receivers simultaneously, where the receivers form a subset of all the receivers up to and including all of the receivers. A broadcast system is a system in which a server transmits the same data to all of the receivers simultaneously. That is, a multicast system by definition can include a broadcast system. A content server is typically located at a content service provider such as a satellite content service provider, cable service provider or broadcast service provider. The content servers may also be distributed as opposed to being in a single location. That is, there may be regional or local content servers. Such an arrangement moves the content closer to groups of users and also provides a certain amount of redundancy.

This section is intended to introduce the reader to various aspects of art, which may be related to the present embodiments that are described below. This discussion is believed to be helpful in providing the reader with background information to facilitate a better understanding of the various aspects of the present disclosure. Accordingly, it should be understood that these statements are to be read in this light.

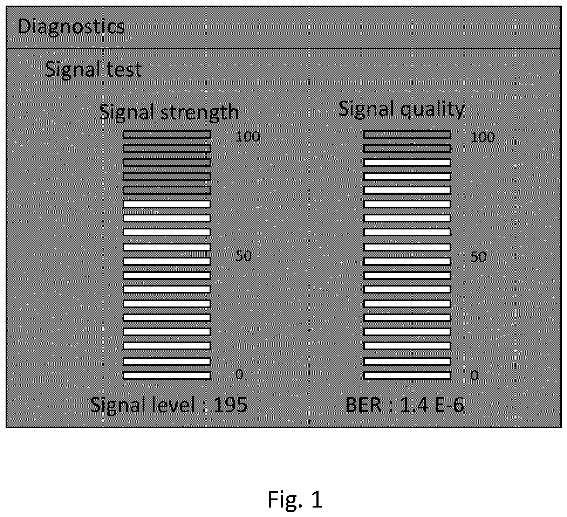

In a digital television reception equipment, the end user usually has access to very few technical parameters in relation to the quality and strength of the received signal as shown in the Fig. 1. Should a loss of service be experienced, the user may be able to determine if signal reception is of good quality or not across the entire RF (Radio Frequency) channel plan, but it would be of great value for the consumers as well as the service operator to be able to anticipate a reception failure and, should a loss of signal happen, help diagnose the root cause of the reception failure with high probability.

For example, Fig. 1 shows a typical dashboard available from the user interface of a satellite receiving device (set-top box, television screen or home gateway), which is meant to help the user achieve correct antenna pointing and check whether reception conditions are good (acceptable, sufficient) or bad (unacceptable, insufficient). This is made possible by assessing the received signal power level and the bit-error rate (BER) performance, and instructing the user to maximize these by fine-tuning the pointing of the antenna. Similar dashboards exist for cable and digital terrestrial reception devices. The antenna may be mounted on a roof top or installed in an attic or mounted on a post on the ground.

Service degradation can be sudden (as a result of the failure of a component or an equipment in the signal delivery and reception chain) or progressive (as a consequence of equipment component aging, for example) and there can be many other root causes for such degradation or disruption. In order to improve the quality of service delivered to consumers, it is of high value to provide early notification that the quality of reception is degrading over time, even before the quality of service is altered, indicating a high probability for short-term failure, allowing the user to take preventive actions before black-out happens. Also, should a failure arise, providing accurate diagnostic information will help the user determine whether something has to be fixed on the user's side and if so what the corrective action is.

### SUMMARY

The proposed method and apparatus monitors locally, as a background activity, the service performance of receiving equipment (set top box) and analyzes performance degradation over time. Analysis is made by monitoring multiple reception parameters and comparing these with a self-learning failure prediction model hosted in the reception device (receiving device) and initialized at time of the device (antenna) installation. If the method and apparatus detects a high probability for failure as result of the reception performance getting close to the limits (boundaries, thresholds) of the functional domain, then an early warning notification (alert) is provided to the user via a suitable pop-up message in the user interface of the display device (e.g.,TV), indicating the corrective action(s) that may be taken. Should the reception suddenly fail, then the user is also notified of the likely root cause(s) for failure based on past history.

A first aspect provides a method for evaluating performance of a receiving device is described including collecting reception parameters for monitoring based on content received from a content delivery system, performing statistical analysis on the collected parameters, comparing results of the statistical analysis to operational parameters, updating a parameter map responsive to results of the comparison, generating a graph of performance of at least one of the collected parameters over time, based on the updated parameter map, determining at least one failure point based on the graph and forwarding an indication of a probable failure responsive to the failure point.

In an embodiment, the comparing includes determining if the content delivery system is operating normally and updating the parameter map if the content delivery system is not operating normally.

In another embodiment the determination is accomplished by determining if the operational parameters are within limits.

In another embodiment the generation of the graph of performance includes determining a functional domain of the graph based on the updated parameter map.

In another embodiment the determination of the at least one failure point includes determining the crossover of a curve of predicted functional data with a functional boundary of the functional domain.

In another embodiment detecting performance trends in the graph is preferably accomplished based on regression analysis.

A second aspect provides a receiving device including a receiver for receiving content from a content delivery system, a memory and at least one processor configured to collect reception parameters for monitoring based on the received content, perform statistical analysis on the collected parameters, compare results of the statistical analysis to operation parameters, update a parameter map responsive to results of the comparison, generate a graph of performance based on the updated parameter map, calculate a failure point based on the graph and forward an indication of a probable failure and possible cause responsive to the failure point.

In an embodiment the at least one processor is further operable to determine if the content delivery system is operating normally and update the parameter map if the content delivery system is not operating normally.

In another embodiment the determination is accomplished by determining if the operational parameters are within limits.

In another embodiment the generation of the graph of performance includes determining a functional domain of the graph based on the updated parameter map.

In another embodiment the determination of the at least one failure point includes calculating the crossover of a curve of predicted functional data with a functional boundary of the functional domain.

In another embodiment of the method or the receiving device, the reception parameters include at least one of an estimation of carrier level, carrier-to-noise ratio, bit error rate, received frequency, packet error rate, packet count and, for a satellite system, polarity and band, and wherein the statistical analysis includes at least one of histograms, standard deviation and average.

In another embodiment of the method or the receiving device, the collected parameters include parameters collected at installation of the receiving device at a service location and recurring data collected over time with timestamps.

In another embodiment of the method or the receiving device, forwarding the indication further comprises forwarding the indication to a service provider and forwarding the indication to a display device at a service location.

### BRIEF DESCRIPTION OF THE DRAWINGS

The proposed method and apparatus is best understood from the following detailed description when read in conjunction with the accompanying drawings. The drawings include the following figures briefly described below:
Fig. 1 is an exemplary dashboard of reception quality and strength of a satellite signal receiving device.
Fig. 2 is a block diagram of an exemplary embodiment of the proposed apparatus.
Fig. 3 is an exemplary depiction (graph) of trends indicating a risk of failure of a content delivery system.
Fig. 4 is an exemplary parameter map of the monitored parameters of the content delivery system.
Fig. 5 is a flowchart of an exemplary embodiment of a portion of the proposed method.
Fig. 6 is a flowchart of an exemplary overall embodiment of the proposed method.

It should be understood that the drawing(s) are for purposes of illustrating the concepts of the disclosure and is not necessarily the only possible configuration for illustrating the disclosure.

### DETAILED DESCRIPTION

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

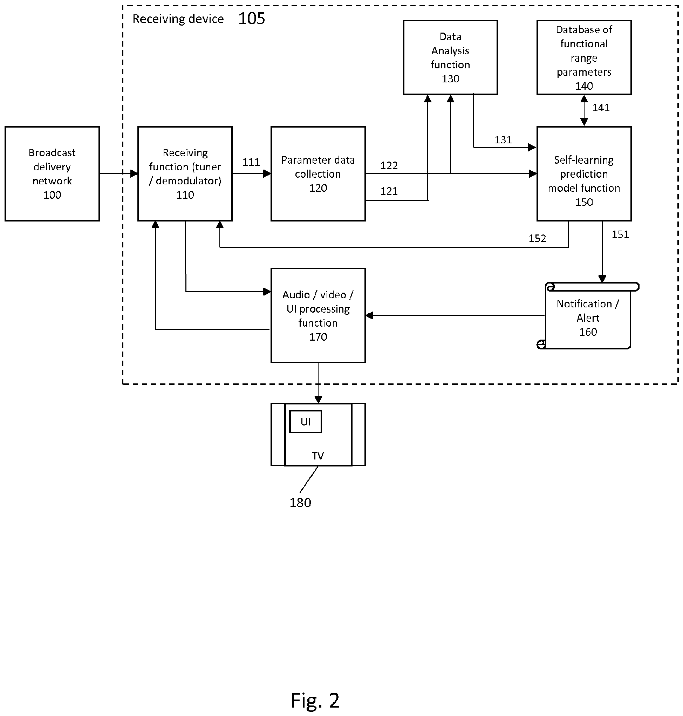

Fig. 2 is a block diagram of an exemplary embodiment of the proposed apparatus. The broadcast content delivery network (100) may be a satellite reception system (including antenna, low-noise block converter, RF switches and coaxial distribution), a cable distribution system or a digital terrestrial television system (including antenna, amplifiers and coaxial distribution network). It delivers the RF multiplexed signal at the input of the receiving equipment.

The receiving function (110) of the receiving device (set-top box, television set, home gateway) includes a tuner, demodulator and other features relevant for the purpose of the proposed method and apparatus, such as a packet error detector. This receiving function provides all real-time data (111), collected periodically from the functional reception parameters being monitored which are relevant for the purpose of the proposed method and apparatus, such as an estimate of the carrier level and carrier to noise ratio (CNR), the bit-error rate (BER), the received frequency, the polarity and band (for satellite), the packet error rate, the packet count, etc... to the parameter data collection function (120). The receiving function also receives the content (audio, video, multimedia) for storage and/or delivery to an audio / video / User Interface processing function (170) which connects to a display device, such as a TV set 180. The audio / video / User Interface processing function 170 also communicates with the receiving function, for example, to advise the receiving function of channel selection and other selections such a picture-in-picture (PIP), second audio program (SAP), etc.)

The parameter data collection function (120) is in charge of collecting and providing the parameter data (121) in relation to (i) the first successful installation of the receiving device (105) for use as the initial reference point, and (ii) the recurring data (122) collected over time from the receiving function and delivered along with a timestamp (time and date of collection at appropriate time intervals).

The data analysis function (130) provides statistical analysis data (131) such as histogram, standard deviation, average, etc... based on collected data (121 and 122).

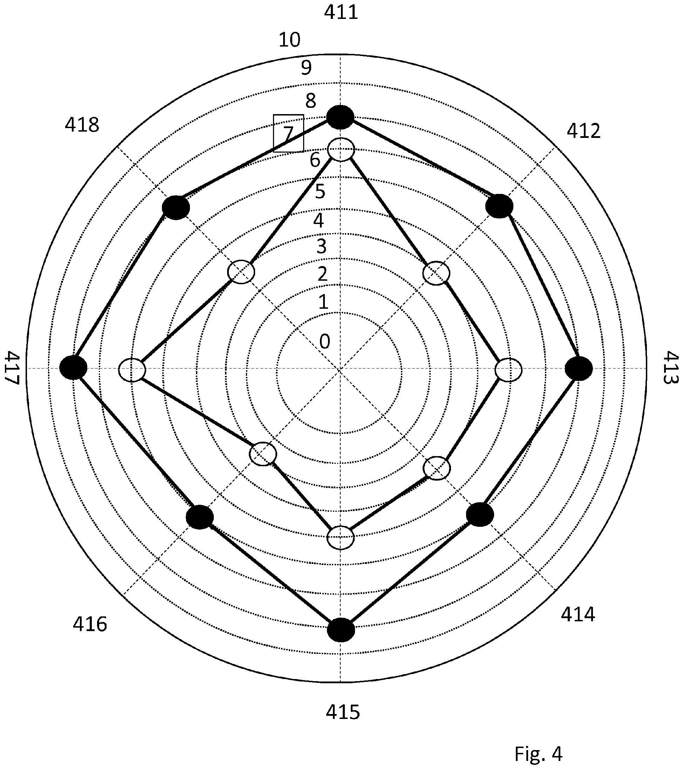

The self-learning prediction model function (150) is initialized with a set (141) of operational (functional range) parameters (411 to 418) stored in the database (140) created at device manufacture time. The set of operational (functional range) parameters determine the boundaries (limits) within which the content delivery system is expected to operate nominally (normally). For example, these boundaries (limits) can be min and max input power, min C/N or Eb/No ratios, max bit error rate, etc... considered individually or combined together. Fig. 4 is an exemplary parameter map (radar chart) of the monitored parameters of the content delivery system. The value of each monitored and measured parameter 411 to 418 (such as but not limited to Eb/No, signal-to-noise ratio (SNR), channel frequency drift, received signal strength indicator (RSSI), etc.) is represented as a white dot on one of the axis of the chart whereas the value of each functional range parameter (141) is represented as a dark dot. The area enclosed by the dark dots represents the area within which the receiving device operates properly. The numbers (0 - 10) represent the values of the various parameters (properties), from excellent (0) to too insignificant to be measured (10). It should be noted that the value of, for example, the RSSI and SNR may not all be in the range of 0 - 10 but may be scaled and/or converted to be within the range 0 - 10.

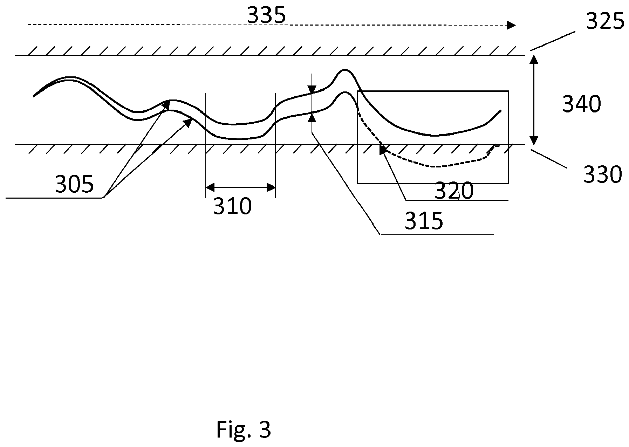

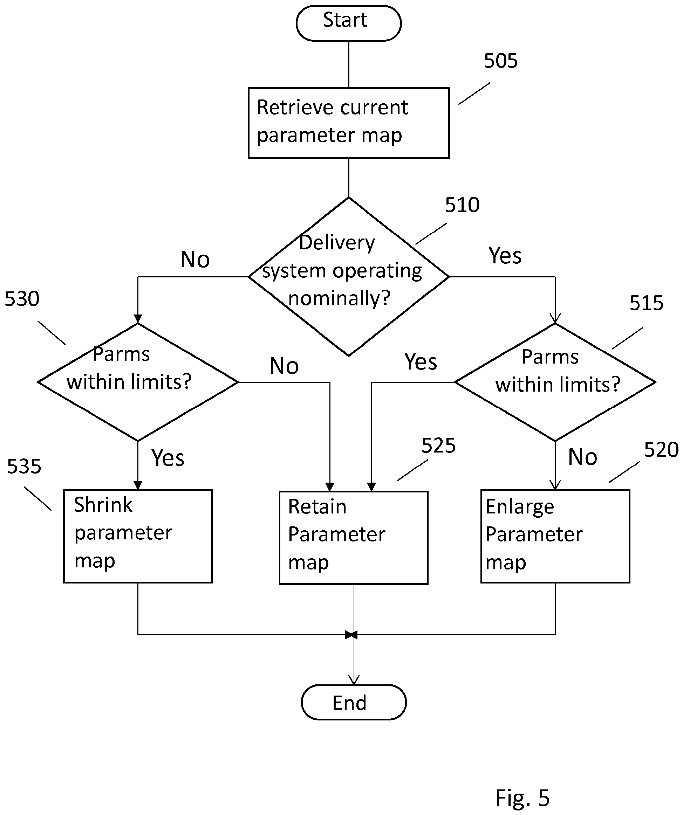

The self-learning prediction model function (150) constantly monitors the recurring data (122) and performs five functions:
1. The self-learning prediction model function constantly re-evaluates the actual limits (boundaries) of the functional operational range by monitoring if the current device performance is within or outside these boundaries (malfunction within or correct operation outside the current boundaries), detects any change and, if any, consequently updates in the database 140 the parameter map limits accordingly (multi-dimensional cartography) - this process is pictured in Fig. 5. The self-learning prediction model function retrieves the operational (functional range) parameters and parameter map and compares the results of the statistical analysis to the retrieved parameters.
2. The self-learning prediction model function monitors the actual device performance over time and maintains data records, for at least one year in order to factor in the seasonal effects (temperature swings, windy storms, ..). The self-learning prediction model function updates the database of operational (functional range) parameters and the parameter map based on the results of the comparison above.
3. The self-learning prediction model function monitors the current performance of the device and detects any trend indicating a risk for failure based, for example, on regression algorithms. A functional domain of the graph is determined by the updated parameter map. The self-learning prediction model function generates a graph of performance of one or more collected parameters over time. The self-learning prediction model function calculates failure points based on the graph Fig. 3 is an exemplary two-dimensional depiction (graph) of trends indicating a risk of failure of a content delivery system. The top curve of Fig. 3 shows the variation of the parameter(s) being monitored over one year and the bottom curve shows the same pattern as observed one year later, but an increasing performance drift appears over time, indicating high probability for failure in the future. The functional domain 340 is the operational domain between the lower functional boundary 330 and the upper functional boundary 325 over time 335. The top curve and the bottom curve show the functional data 305. The difference between the top curve and the bottom curve shows the performance drift 315. Seasonal effects (or the effect of a recurring event) 310 indicates a variation in the functional parameters, for example, between summer (heat, humidity, wind (from tornados or hurricanes)) and winter (cold, snow, hail, sleet, wind). The dotted line portion of the bottom curve is predicted functional data and where the dotted line (prediction) crosses the upper or the lower functional boundary is the predicted (probable, potential, possible) failure point 320.
4. Should a failure become highly probable, the self-learning prediction model function raises an indication (e.g., flag, semaphore, notification, alert) (151) with detailed description of the likely root cause(s) based on the analysis of the weakest parameters, so that an early notification (160) can be made via the user interface of the display device or any other means of informing the user (service location) or display device at the service provider. Such means for informing the user may include a WiFi interface in the display device which sends an email or text message to the user's computer or mobile phone.
5. If a failure occurs, the proposed method and apparatus provides a detailed description (151) of the likely root cause(s) based on the analysis of the weakest parameters, so that the user can be guided for solving the issue being faced.

The self-learning prediction model function (150) also has capability to control the receiving function (110) via a control bus (152) in order to perform specific data measurement, either proactively in order to help expedite the self-learning process (for example by performing periodically a complete performance measurement test cycle when the device is, for example, in stand-by mode) or after a failure has been detected in order to provide an accurate diagnosis.

Potential root causes (single or combined) for satellite content delivery system reception failure include antenna de-pointing, cross-polarization jamming, amplification non-linearity in relation to active device aging, oxidation of cabling connectors (outdoor but also indoor), large temperature variations of the outdoor components and rain fade resulting in signal attenuation. Potential root causes for reception failures in cable network installations include line amplifier aging, oxidation of cabling connectors (outdoor but also indoor) and large temperature variations of the outdoor components. For broadcast terrestrial (aerial) reception include antenna de-pointing, amplification non-linearity in relation to active device aging, oxidation of cabling connectors (outdoor but also indoor), large temperature variations of the outdoor components and rain fade & wind resulting in signal strength variations/oscillations.

Fig. 5 is a flowchart of an exemplary embodiment of the proposed method. The purpose of the proposed method is to adjust the boundaries (limits) according to the actual normal functioning of the content delivery systems. Normal operation is when the quality of experience of the end user is achieved (i.e., bit error rate (BER) under the threshold where all errors can be corrected). If one or more parameters are outside the normal operational limits then this could point to a reason for less than optimal quality of experience for the end user. A notification (alert) nay be displayed or kept in a log file for further repair diagnosis or STB provider statistics.

At 505 the current parameter map limits are retrieved from the database 140 of functional range parameters 141. At 510 a test is performed to determine if the content delivery system is operating normally. If the content delivery system is operating normally, then at 515 a test is performed to determine if the current values of the parameters are within the normal operation boundaries (limits) formed by the space enclosed by the dark dots. If the current value of one or more parameter is not within the boundaries (limits) then at 520 the area of the parameter map that is enclosed by the dark dots is enlarged for that or these parameters, which means that the functional range for normal operation of one or more parameters has increased. If the current values of all measured parameters is within the boundaries (limits), then at 525 the current parameter map limits (boundaries) are retained (kept, remain unchanged). If the content delivery system is not operating normally then at 530 a test is performed to determine if the current values of the parameters are within the boundaries (limits) formed by the space enclosed by the dark dots. If the current value of one or more parameters is within the boundaries (limits), then at 535 the area of the parameter map that is enclosed within the dark dots is shrunk for that or these parameters, which means that the functional range for normal operation of one or more parameters has been reduced. If the current values of the parameters are not within the boundaries (limits) then at 525 the current parameter map limits (boundaries) are retained (kept, remain unchanged). Enlarging or shrinking of the parameter map better reflects the actual operation of the receiving device that may differ from a factory setting.

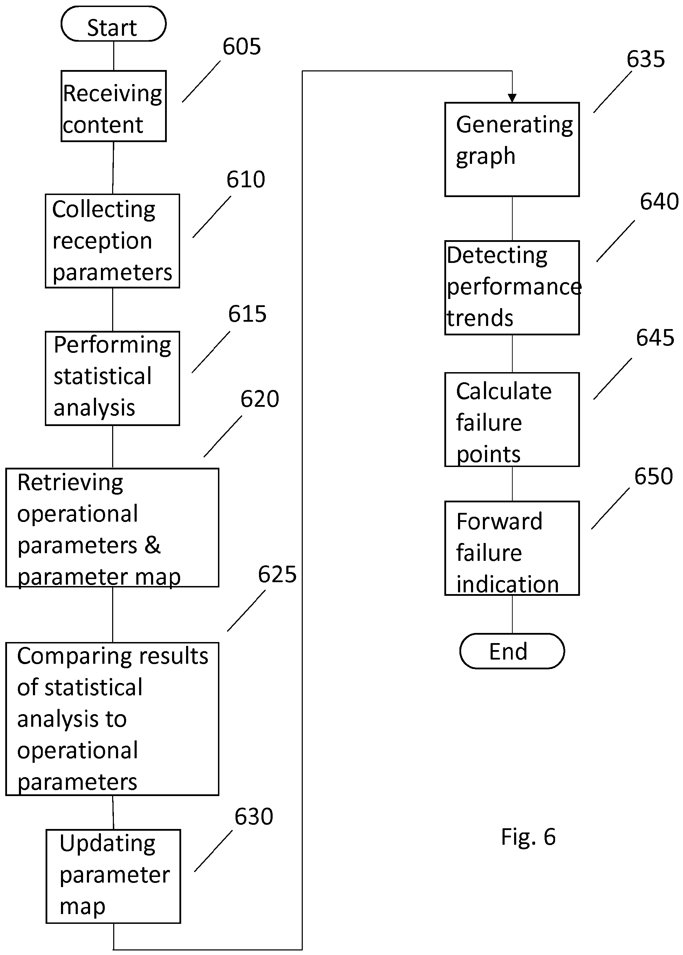

Fig. 6 is a flowchart of an exemplary overall embodiment of the proposed method. At 605 the receiving device receives content from a content delivery system. At 610 the reception parameters for monitoring are collected based on the received content. At 615 statistical analysis is performed on the collected parameters. At 620 the operational (functional range) parameters and a parameter map are retrieved. At 625 the results of the statistical analysis are compared to the operational parameters. At 630 the parameter map is updated responsive to results of the comparison. At 635 a graph of performance of at least one of the collected parameters over time is generated. A functional domain of the graph is determined based on the updated parameter map. At 640 performance trends are detected based on where and when on a curve of predicted functional data that the predicted functional data crosses a functional boundary of the functional domain on the graph the graph. At 645 a failure point is calculated based on the graph. At 650 an indication of a probable (predicted, possible, potential) failure and possible cause is forwarded to either or both the user at a service location and a service provider.

It is to be understood that the proposed method and apparatus may be implemented in various forms of hardware, software, firmware, special purpose processors, or a combination thereof. Special purpose processors may include application specific integrated circuits (ASICs), reduced instruction set computers (RISCs) and/or field programmable gate arrays (FPGAs). Preferably, the proposed method and apparatus is implemented as a combination of hardware and software. Moreover, the software is preferably implemented as an application program tangibly embodied on a program storage device. The application program may be uploaded to, and executed by, a machine comprising any suitable architecture. Preferably, the machine is implemented on a computer platform having hardware such as one or more central processing units (CPU), a random access memory (RAM), and input/output (I/O) interface(s). The computer platform also includes an operating system and microinstruction code. The various processes and functions described herein may either be part of the microinstruction code or part of the application program (or a combination thereof), which is executed via the operating system. In addition, various other peripheral devices may be connected to the computer platform such as an additional data storage device and a printing device.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

It is to be further understood that, because some of the constituent system components and method steps depicted in the accompanying figures are preferably implemented in software, the actual connections between the system components (or the process steps) may differ depending upon the manner in which the proposed method and apparatus is programmed. Given the teachings herein, one of ordinary skill in the related art will be able to contemplate these and similar implementations or configurations of the proposed method and apparatus.

For purposes of this application and the claims, using the exemplary phrase "at least one of A, B and C," the phrase means "only A, or only B, or only C, or any combination of A, B and C."

## Claims

1. A method for evaluating performance of a receiving device, comprising
collecting (610) reception parameters for monitoring based on content received from a content delivery system;
performing (615) statistical analysis on said collected parameters;
comparing (625) results of said statistical analysis to operational parameters;
updating (630) a parameter map responsive to results of said comparison;
generating (635) a graph of performance of at least one of said collected parameters over time, based on said updated parameter map;
determining (645) at least one failure point based on said graph; and
forwarding (650) an indication of a probable failure responsive to said failure point.

2. The method according to claim 1, wherein said comparing comprises:
determining (510) if the content delivery system is operating normally; and
updating (535, 520) said parameter map if the content delivery system is not operating normally.

3. The method according to claim 2, wherein said determination comprises determining (515, 530) if the operational parameters are within limits.

4. The method according to any preceding claim wherein generating the graph of performance comprises determining a functional domain of the graph based on said updated parameter map.

5. The method according to claim 4 wherein determining the at least one failure point comprises determining the crossover of a curve of predicted functional data with a functional boundary of said functional domain.

6. The method according to any preceding claim further comprising detecting performance trends in the graph, preferably based on regression analysis.

7. A receiving device, comprising:
a receiver for receiving content from a content delivery system;
a memory and at least one processor configured to
collect (120) reception parameters for monitoring based on said received content;
perform statistical analysis (130) on said collected parameters;
compare results of said statistical analysis to operation parameters;
update a parameter map responsive to results of said comparison;
generate a graph of performance based on said updated parameter map;
calculate a failure point based on said graph; and
forward an indication of a probable failure and possible cause responsive to said failure point.

8. The receiving device according to claim 7, wherein the at least one processor is further operable to:
determine (510) if the content delivery system is operating normally; and
update (535, 520) said parameter map if the content delivery system is not operating normally.

9. The receiving device according to claim 8, wherein said determination comprises determining (515, 530) if the operational parameters are within limits.

10. The receiving device according to any one of claims 7 to 9 wherein generating the graph of performance comprises determining a functional domain of the graph based on said updated parameter map.

11. The receiving device according to claim 10 wherein determining the at least one failure point comprises calculating the crossover of a curve of predicted functional data with a functional boundary of said functional domain.

12. The method according to any one of claims 1 to 6, or the receiving device according to any one of claims 7 to 11 wherein said reception parameters comprise at least one of an estimation of carrier level, carrier-to-noise ratio, bit error rate, received frequency, packet error rate, packet count and for a satellite system the polarity and band.

13. The method according to any one of claims 1 to 6 or 12, or the receiving device according to any one of claims 7 to 12, wherein said statistical analysis comprises at least one of a histogram, a standard deviation and an average.

14. The method according to any one of claims 1 to 6 or 12-13, or the receiving device according to any one of claims 7 to 13, wherein said collected parameters include parameters collected at installation of said receiving device at a service location and recurring data collected over time with timestamps.

15. The method according to any one of claims 1 to 6 or 12-14, or the receiving device according to any one of claims 7 to 14, wherein said forwarding (150) the indication comprises forwarding said indication to a service provider and forwarding said indication to a display device at a service location.
